# EUROPÄISCHE PATENTSCHRIFT

(11) **EP 2 199 476 B1**
(45) Veröffentlichungstag und Bekanntmachung des Hinweises auf die Patenterteilung: **07.05.2014**
(21) Anmeldenummer: 09177291.3
(22) Anmeldetag: 27.11.2009
(51) Int. Cl.: E04B 1/41

(54) **Ankerschiene**
Anchor bar
Rails d'ancrage

(30) Priorität: 17.12.2008 DE 102008054807
(43) Veröffentlichungstag der Anmeldung: 23.06.2010
(73) Patentinhaber: HILTI Aktiengesellschaft, 9494 Schaan (LI)
(72) Erfinder: Birnbaum, Ulrich, 86929 Epfenhausen (DE); Gebhard, Jürgen, 9450 Altstätten (CH); Heudorfer, Markus, 9470 Buchs (CH); Novokshanov, Denis, 9470 Buchs (CH); Spreizer, Erich, 3341 Ybbsitz (AT); Schachinger, Harald, 3341 Ybbsitz (AT)

(56) Entgegenhaltungen:
- EP-A1- 0 212 638
- DE-A1- 2 609 815
- DE-A1- 3 918 044
- DE-A1- 19 859 208
- US-A- 5 743 062

## Beschreibung

Die Erfindung betrifft eine Ankerschiene, der im Oberbegriff des Patentanspruchs 1 genannten Art.

Derartige Ankerschienen werden zur Schaffung von flexiblen Befestigungspunkten an einem gegossenen Bauteil, z. B. aus Beton, vorgängig in der Schalung des Bauteils eingelegt und beim Giessen des Bauteils in dieses eingegossen. Mittels Schienenmuttem, Hintergreifteile oder Hammerkopfschrauben als Anbindeteile, die im Aufnahmeraum des Schienenkörpers aufgenommen werden, sind Befestigungselemente an den Ankerschienen festlegbar. Die Lasten werden über die Schienengeometrie und die Ankerelemente in das ausgehärtete Bauteil übertragen.

Ankerschienen, bei denen die Ankerelemente fest, z. B. schweisstechnisch, am Schienenkörper festgelegt sind, müssen vollständig werkseitig gefertigt werden. Dies ergibt ein ungünstiges Transportvolumen, was hohe Transportkosten verursacht. Zudem müssen für verschiedenartige Belastungen unterschiedliche Arten von Ankerschienen zur Verfügung gestellt werden, was zu einem grossen logistischen Aufwand führt.

Aus der DE 26 19 182 A1 ist eine Ankerschiene mit einem Schienenkörper bekannt, der einen über eine Montageöffnung von aussen zugänglichen Aufnahmeraum zur Aufnahme eines Anbindeteils für die Festlegung eines Befestigungselementes an der Ankerschiene ausbildet und der an seiner Rückwand mit einer aufgeschweissten Mutter versehen ist. Die Ankerelemente weisen jeweils einen Schaft auf, der an einem Ende mit einem Kopfabschnitt und an dem anderen Ende mit einem Aussengewinde versehen ist, das zur Festlegung des Ankerelementes an dem Schienenkörper in das Innengewinde der aufgeschweissten Mutter einschraubbar ist.

Nachteilig an der bekannten Lösung ist, dass durch den Schweissvorgang eine Gefügeänderung in dem Grundmaterial erfolgt, welche die Materialeigenschaften des Schienenkörpers nachteilig beeinflusst. Ist eine Ankerschiene zum Schutz während der Lagerung und gegenüber aggressiver Umgebung mit einer Korrosionsschutzschicht versehen, wird diese bei einem Schweissvorgang zumindest bereichsweise zerstört.

Aus der gattungsbildenden DE 26 09 815 A1 ist eine Ankerschiene mit einem Schienenkörper bekannt, der einen Aufnahmeraum zur Aufnahme eines Anbindeteils für die Festlegung eines Befestigungselementes an der Ankerschiene ausbildet und der mit Lochungen versehen ist, wobei in den Lochungen Verbindungsteile zur Festlegung von Ankerelementen an dem Schienenkörper vorgesehen sind. Die Verbindungsteile weisen einen Anlageabschnitt und einen davon abragenden Festlegeabschnitt auf, an dem die Ankerelemente festlegbar sind und der durch die Lochung im Schienenkörper durchgesteckt wird. Die Verbindungsteile werden gegen Herausziehen an dem Schienenkörper gesichert.

Nachteilig an der bekannten Lösung ist, dass die Sicherung der Verbindungsteile an dem Schienenkörper aufwändig ist. Bei einem Schienenkörper, der vorgängig mit einer Korrosionsschutzschicht versehen wurde, ist nach dem Lochen des Schienenkörpers diese Korrosionsschutzschicht am freien Rand der Lochung nicht mehr vorhanden. Auch nach der Anordnung der Verbindungsteile gemäss der DE 26 09 815 A1 sind die freien Ränder der Lochungen nicht mehr ausreichend vor Korrosion geschützt.

Die DE 198 59 208 A1 beschreibt ein metallisches Befestigungsteil, z. B. eine T-Mutter oder einen Niet, welches einen aufspreizbaren Bereich umfasst, welcher leicht von einem Befestigungsobjekt in einem ausgedienten Produkt entfernt werden kann, ohne die Festigkeit der Verbindung zu dem Befestigungsobjekt zu vermindern. Das Befestigungsteil der DE 198 59 208 A1 weist dabei ein Innengewinde auf.

Aufgabe der Erfindung ist es, eine Ankerschiene zu schaffen, welche die vorgenannten Nachteile nicht aufweist und insbesondere einen ausreichenden Korrosionsschutz trotz der angeordneten Verbindungsteile zur Festlegung der Ankerelemente an dem Schienenkörper aufweist.

Die Aufgabe wird durch die Merkmale des unabhängigen Anspruchs 1 gelöst. Vorteilhafte Weiterbildungen sind in den Unteransprüchen dargelegt.

Gemäss der Erfindung sind die Verbindungsteile als Nieten, nämlich als Einnietmuttern mit einem Grundkörper und einem sich von dem Grundkörper erstreckenden Kragenabschnitt als Festlegeabschnitt ausgebildet, wobei der Grundkörper einen grösseren Durchmesser als der Kragenabschnitt aufweist und eine Anlageseite des Grundkörpers ein Durchfallen der Einnietmutter durch die Lochung bei deren Montage verhindert, und wobei die jeweils durch die Lochung gesteckten Kragenabschnitte der Nieten zur Festlegung der Nieten am Schienenkörper aufgeweitet, insbesondere umgebördelt, sind und die Nieten jeweils ein Festlegemittel zur Festlegung der Ankerelemente an dem Schienenkörper aufweisen.

Beim Aufweiten des entsprechenden Abschnitts des Niets wird der beim Lochen des Schienenkörpers nicht mehr korrosionsgeschützte Rand der Lochung nahezu vollständig von diesem Abschnitt des Niets umfasst, womit dieser Bereich des Schienenkörpers wieder ausreichend korrosionsgeschützt ist. Vorteilhaft wird der entsprechende Abschnitt des Niets umgebördelt, womit der nicht mehr korrosionsgeschützte Rand der Lochung in einfacher Art und Weise vollständig von diesem Abschnitt des Niets umfasst wird. Mit der Aufweitung wird zudem eine sichere Festlegung des Verbindungsteils am Schienenkörper sichergestellt, wobei die Aufweitung und insbesondere eine Umbördelung nur einen geringen Platzbedarf aufweist. Des Weiteren wird der Abschnitt des Schienenkörpers im Bereich der Lochungen versteift. Die Nieten sind beispielsweise Blind- oder Popnieten, welche z. B. mit einem Gewindeabschnitt oder einem Bajonettanschluss zur formschlüssigen Festlegung der Ankerelemente am Schienenkörper versehen sind. Die Verbindungsteile und der Schienenkörper können aus unterschiedlichen Materialien gefertigt sein. Beispielsweise wird der Schienenkörper aus einem Stahl gefertigt, der mit einer Beschichtung als Korrosionsschutz versehen ist, wobei die Verbindungsteile z. B. aus einem Aluminium hergestellt sind. Weiter können in eine Grösse von Lochung Nieten mit unterschiedlich ausgebildeten Festlegemittel vorgesehen werden. Weist der Niet beispielsweise einen Gewindeabschnitt als Festlegemittel auf, so kann in einer Standard-Lochung von z. B. 15 mm ein Niet als Verbindungsteil mit einem M6, M8, M10 oder M12 Gewindeanschluss angeordnet werden.

Die Ankerelemente lassen sich in Bezug auf den Aufnahmeraum von aussen her an dem Schienenkörper festlegen. Dadurch kann beispielsweise der Schienenkörper mit einer Füllung versehen werden, wobei die Ankerelemente weiterhin am Schienenkörper festlegbar sind. Des Weiteren lassen sich einfach unterschiedliche Arten von Ankerelementen an einem Schienenkörper festlegen, womit die Ankerschiene, gegebenenfalls auch auf der Baustelle, an verschiedenartige Belastungen anpassbar ist. Auch eine bereits zusammengestellte Ankerschiene ist, beispielsweise auch direkt auf der Baustelle, einfach an eine andere Belastungsart anpassbar. Dabei weist die Ankerschiene bis zum Festlegen der Ankerelemente an dem Schienenkörper ein minimales Transportvolumen auf.

Vorzugsweise umgreift der Festlegeabschnitt zumindest eines Niets in Bezug auf den Aufnahmeraum den Rand der Lochung von aussen her, so dass der Festlegeabschnitt des Niets von innen her, durch den Aufnahmeraum des Schienenkörpers durch die Lochung gesteckt und anschliessend aufgeweitet wird. Der Niet wird vorteilhaft durch die Montageöffnung, durch welche der Aufnahmeraum von aussen her zugänglich ist, durch die Lochung durchgesteckt. Alternativ wird der Niet von einem Ende des Schienenkörpers her entlang der Längserstreckung des Schienenkörpers bis zur entsprechenden Lochung geführt und anschliessend dessen Festlegeabschnitt durch diese hindurchgesteckt. Diese alternative Montageart ermöglicht die Anordnung von Nieten, die einen Abschnitt mit einer grösseren Erstreckung als die Breitenerstreckung der Montageöffnung aufweisen. Da im Wesentlichen nur die Aufweitung im Bereich der Lochung über die Aussenkontur des Schienenkörpers vorsteht, weist ein derartiger Schienenkörper trotz dem angeordneten Verbindungsteil zur Festlegung der Ankerelemente am Schienenkörper ein nur unwesentlich grösseres Transportvolumen als ohne ein angeordnetes Verbindungsteil auf.

In einer alternativen Ausführung umgreift der Festlegeabschnitt zumindest eines Niets in Bezug auf den Aufnahmeraum den Rand der Lochung von innen her, so dass der Festlegeabschnitt des Niets von aussen her, durch die Lochung gesteckt und anschliessend innenseitig aufgeweitet wird. Der trotz dem angeordneten Verbindungsteil verbleibende Anteil des Aufnahmeraums reicht auch bei knapp bemessenen Schienenkörpern für eine einfache Montage des Anbindeteils aus. Zudem lassen sich die Nieten einfach an dem Schienenkörper von aussen her zuführen.

An einem Schienenkörper können nur von innen her zugeführte oder nur von aussen her zugeführte sowohl als auch von innen und von aussen her zugeführte Nieten als Verbindungsteile zur Festlegung der Ankerelemente am Schienenkörper vorgesehen sein.

Vorzugsweise ist zumindest eine Vertiefung mit einem Bodenabschnitt an dem Schienenkörper vorgesehen und zumindest eine der Nieten ist in dem Bodenabschnitt der Vertiefung angeordnet. Die zumindest eine Vertiefung ist beispielsweise in Bezug auf den Aufnahmeraum nach aussen gerichtet an dem Schienenkörper vorgesehen, so dass mit einer beispielsweise topfförmig ausgebildeten Vertiefung ein zusätzlicher Montageraum zur Aufnahme eines Nietabschnitts geschaffen wird, ohne dass dieser den Raum für das Anbindeteil innerhalb des Aufnahmeraums einschränkt. Der im Bodenabschnitt angeordnete Niet ist vorteilhaft derart zu dem Bodenabschnitt ausgerichtet, dass dessen Festlegemittel senkrecht vom Bodenabschnitt abragt. Der Bodenabschnitt der zumindest einen Vertiefung kann im Grundriss in Bezug auf den darin angeordneten Niet eine unkonzentrische Ausgestaltung aufweisen, womit die Vertiefung beispielsweise entsprechend der auftretenden Belastung der Ankerschiene anpassbar ist. Der Bodenabschnitt weist beispielsweise eine elliptische oder mehreckige, z. B. rechteckige Ausgestaltung auf. Dabei muss der Bodenabschnitt in Bezug auf den darin angeordneten Durchzug nicht spiegelsymmetrisch ausgebildet sein. Weiter kann der Bodenabschnitt im Grundriss eine runde Ausgestaltung aufweisen, dessen Zentrum ausserhalb des Zentrums des Niets liegt. Der Bodenabschnitt der zumindest einen Vertiefung ist beispielsweise mit Versteifungssicken versehen, womit dieser Bereich der Vertiefung vorteilhaft versteift wird und die Ankerschiene ein vorteilhaftes Tragverhalten aufweist. Durch die Anordnung der Vertiefung am Schienenkörper wird dieser Abschnitt kaltverfestigt, womit das Material des Schienenkörpers in diesem hochbeanspruchten Bereich eine höhere Festigkeit aufweist.

Bevorzugt ist die zumindest eine Vertiefung dem Aufnahmeraum zugewandt ausgerichtet und bildet eine in Bezug auf die Aussenseite des Schienenkörpers nach innen geformte Eindellung auf, in welcher der aufgeweitete Festlegeabschnitt des Niets vorteilhaft vollständig aufgenommen wird. Auch bei einem Niet der den Rand der Lochung von aussen her umgreift, überragt in dieser Ausführungsform kein Teil über die äussere Hüllfläche des Schienenkörpers, womit dieser Schienenkörper ein geringes Transportvolumen aufweist.

Erfindungsgemäss ist der Niet eine Einnietmutter, deren freies, durch die Lochung gestecktes Ende zur Festlegung der Einnietmutter am Schienenkörper aufgeweitet ist und die vorzugsweise einen Innengewindeabschnitt als Festlegemittel zur Festlegung der Ankerelemente an dem Schienenkörper aufweist. Das Festlegemittel ist vorteilhaft ein Innengewindeabschnitt, der in einer die Einnietmutter vorteilhaft vollständig durchdringenden Bohrung vorgesehen ist.

Eine Einnietmutter für eine vorgenannte Ankerschiene weist einen Grundkörper und einen aufweitbaren, insbesondere umbördelbaren, sich von dem Grundkörper erstreckenden Kragenabschnitt als Festlegeabschnitt auf, wobei der Grundkörper vorzugsweise eine Bohrung mit einem Innengewindeabschnitt zur Festlegung der Ankerelemente aufweist und sich der Innengewindeabschnitt aus dem Grundkörper bis in den Kragenabschnitt erstreckt. Damit Ist die Anordnung von mehr Gewindegängen möglich, als es bei einer Einnietmutter mit einem Innengewindeabschnitt nur im Bereich des Grundkörpers der Fall ist. Mit der grösseren Verankerungslänge an der Einnietmutter lassen sich höhere Lasten in den Untergrund übertragen, was die Tragfähigkeit der Ankerschiene bei geringem Materialaufwand zu deren Fertigung gewährleistet. Des Weiteren kann die Einnietmutter aufgrund des gegenüber herkömmlichen Einnietmuttern längeren Innengewindeabschnitts bei gleicher Lastkapazität eine geringere Bauhöhe aufweisen, was insbesondere bei einer Anordnung der Einnietmutter im Aufnahmeraum, bei welcher der Festlegeabschnitt der Einnietmutter den Rand der Lochung von aussen her umgreift, vorteilhaft ist.

Eine Einnietmutter gewährleistet im Gegensatz zu einer Einpressmutter einen einfachen Korrosionsschutz des freien Randes der in einem korrosionsgeschützten Schienenkörper erstellten Lochung. Bei einer Einpressmutter, welche auch ein Verbindungsteil zur Festlegung der Ankerelemente an dem Schienenkörper ausbilden könnte, verkrallt sich das zumeist gehärtete freie Ende seitlich in den Rand der Lochung, wobei dieser Rand nicht vollständig umfasst und somit auch nicht in einfacher Weise vor Korrosion geschützt ist. Eine Einpressmutter weist somit keinen aufweitbaren und insbesondere keinen umbördelbaren Festlegeabschnitt auf.

Vorzugsweise weist der Kragenabschnitt eine Kragenhöhe auf und der Innengewindeabschnitt erstreckt sich bis maximal 90% der Kragenhöhe, womit noch ein ausreichend gewindefreier Teil des Kragenabschnitts zur Aufweitung beziehungsweise zur Umbördelung zur Verfügung steht. Vorteilhaft erstreckt sich der Innengewindeabschnitt von 70% bis 80% der Kragenhöhe.

Die Erfindung wird nachstehend anhand von Ausführungsbeispielen näher erläutert. Es zeigen:
- Fig. 1: Eine Ankerschiene in Seitenansicht;
- Fig. 2: einen Schnitt entlang Linie II-II in Fig. 1;
- Fig. 3: eine Aufsicht auf den Schienenkörper gem. Linie III-III in Fig. 2;
- Fig. 4: ein zweites Ausführungsbeispiel einer Ankerschiene im Schnitt analog Fig. 2;
- Fig. 5: eine Einnietmutter für eine Ankerschiene im Schnitt; und
- Fig. 6: ein drittes Ausführungsbeispiel einer Ankerschiene im Schnitt analog Fig. 2.

Grundsätzlich sind in den Figuren gleiche Teile mit den gleichen Bezugszeichen versehen.

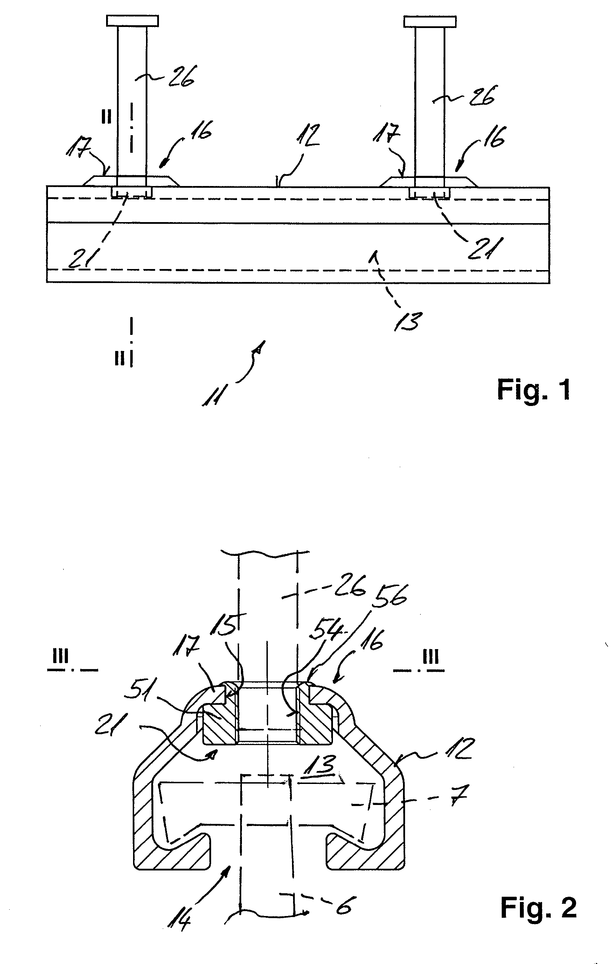

Die in den Figuren 1 bis 3 dargestellte Ankerschiene 11 weist einen Schienenkörper 12 und daran festgelegte Ankerelemente 26 auf. Der Schienenkörper 12 bildet einen Aufnahmeraum 13 zur Aufnahme eines Anbindeteils 7 für die Festlegung eines Befestigungselementes 6 an der Ankerschiene 11 aus, wobei der Aufnahmeraum 13 von aussen durch eine über die Längserstreckung des Schienenkörpers 12 verlaufende Montageöffnung 14 zugänglich ist.

An einer Rückwand des Schienenkörpers 12 sind in Bezug auf den Aufnahmeraum 13 zwei nach aussen gerichteten Vertiefungen 16 vorgesehen, die jeweils einen Bodenabschnitt 17 aufweisen. In jedem Bodenabschnitt 17 ist jeweils eine Lochung 15 vorgesehen, in der jeweils ein Niet, hier eine Einnietmutter 51, als Verbindungsteil 21 mit einem Innengewindeabschnitt 54 zur Festlegung der Ankerelemente 26 am Schienenkörper 12 vorgesehen ist. Der durch die Lochung 15 gesteckte Festlegeabschnitt, hier der Kragenabschnitt 56, zur Festlegung der Nieten am Schienenkörper 12 ist aufgeweitet, insbesondere umgebördelt, und umgreift in Bezug auf den Aufnahmeraum 13 den Rand der Lochung 15 zumindest bereichsweise von aussen her.

Die Ankerelemente 26 weisen an ihren freien Enden einen Aussengewindeabschnitt auf, so dass die Ankerelemente 26 zu deren Festlegung am Schienenkörper 12 in den Innengewindeabschnitt 22 des Verbindungsteils 21 einschraubbar sind. Beispielsweise über einen zwischen dem Aussengewinde des Ankerelementes 26 und dem Innengewindeabschnitt 22 des Verbindungsteils 21 angeordneten Kleber, sind die Ankerelemente 26 unlösbar in den Verbindungsteilen 21 festgelegt.

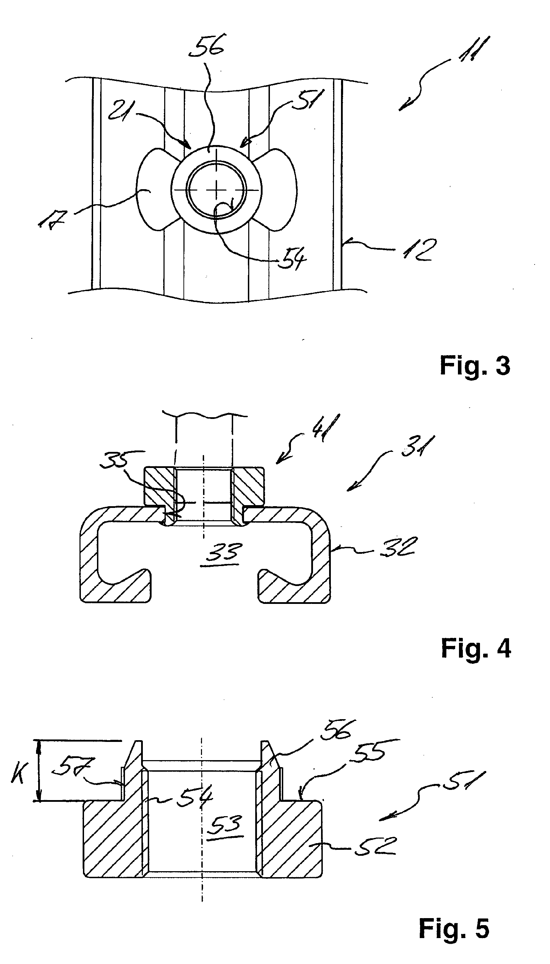

Bei der Ankerschiene 31 gemäss der Figur 4 ist das als Niet ausgebildete Verbindungsteil 41 von aussen her an den Schienenkörper 32 herangeführt, so dass der Festlegeabschnitt des Niets in Bezug auf den Aufnahmeraum 33 den Rand der Lochung 35 von innen her umgreift.

In Figur 5 ist eine Einnietmutter 51 für eine Ankerschiene 11 oder 31 vergrössert dargestellt. Die Einnietmutter 51 weist einen Grundkörper 52 und einen aufweitbaren, sich von dem Grundkörper 52 erstreckenden Kragenabschnitt 56 auf. Da der Grundkörper 52 einen grösseren Durchmesser als der Kragenabschnitt 56 aufweist, kommt die Anlageseite 55 des Grundkörpers 52 beim Durchstecken des Kragenabschnitts 56 durch eine Lochung 15 oder 35 mit der entsprechenden Seite des Schienenkörpers 15 oder 35 in Anlage und verhindert ein Durchfallen der Einnietmutter 51 durch die Lochung 15 oder 35 bei deren Montage. Der Grundkörper 52 ist mit einer durchgehenden Bohrung 53 versehen, die einen Innengewindeabschnitt 54 zur Festlegung der Ankerelemente 26 oder 46 aufweist. Der Innengewindeabschnitt 54 erstreckt sich aus dem Grundkörper 52 bis in den Kragenabschnitt 56. Der Kragenabschnitt 56 weist eine Kragenhöhe K auf und der Innengewindeabschnitt 54 erstreckt sich bis 80% der Kragenhöhe K. Der Kragenabschnitt 56 ist an seiner mit dem Rand der Lochung 15 oder 35 in Anlage kommenden Aussenseite umlaufend mit einer Rändelung 57 versehen. Die Rändelung 57 dringt im montierten Zustand in den Rand der Lochung 15 ein und bildet somit eine Verdrehsicherung der Einnietmutter 51, was eine einfache Festlegung der Ankerelemente ermöglicht.

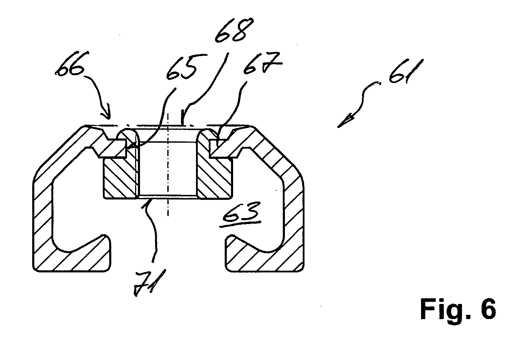

Bei der in der Figur 6 dargestellten Ankerschiene 61 ist an einer Rückwand des Schienenkörpers 62 eine in Bezug auf den Aufnahmeraum 63 nach innen gerichtete beziehungsweise eine dem Aufnahmeraum 63 zugewandt ausgerichtete Vertiefung 66 mit einem Bodenabschnitt 67 vorgesehen. In dem Bodenabschnitt 67 ist eine Lochung 65 vorgesehen, in der ebenfalls ein Niet, hier eine Einnietmutter, als Verbindungsteil 71 zur Festlegung der Ankerelemente am Schienenkörper 62 vorgesehen ist. Der durch die Lochung 65 gesteckte Festlegeabschnitt zur Festlegung des Niets am Schienenkörper 62 ist vorteilhaft umgebördelt und umgreift in Bezug auf den Aufnahmeraum 63 den Rand der Lochung 65 von aussen her. Der aufgeweitete Festlegeabschnitt des Niets überragt die äussere Hüllfläche 68 des Schienenkörpers 62 nicht.

## Patentansprüche

1. Ankerschiene mit einem Schienenkörper (12; 32; 62), der einen Aufnahmeraum (13; 33; 63) zur Aufnahme eines Anbindeteils (7) für die Festlegung eines Befestigungselementes (6) an der Ankerschiene (11; 31; 61) ausbildet und der mit Lochungen (15; 35; 65) versehen ist, wobei in den Lochungen (15; 35; 65) Verbindungsteile (21; 41; 71) zur Festlegung von Ankerelementen (26, 46) an dem Schienenkörper (12; 32; 62) vorgesehen sind, **dadurch gekennzeichnet, dass**
die Verbindungsteile (21; 41; 71) als Nieten, nämlich als Einnietmuttern mit einem Grundkörper (52) und einem sich von dem Grundkörper (52) erstreckenden Kragenabschnitt (56) als Festlegeabschnitt, ausgebildet sind, wobei der Grundkörper (52) einen grösseren Durchmesser als der Kragenabschnitt (56) aufweist und eine Anlageseite (55) des Grundkörpers (52) ein Durchfallen der Einnietmutter (51) durch die Lochung (15, 35) bei deren Montage verhindert, und wobei die jeweils durch die Lochung (15; 35; 65) gesteckten Kragenabschnitte (56) der Nieten zur Festlegung der Nieten am Schienenkörper (12; 32; 62) aufgeweitet, insbesondere umgebördelt, sind und die Nieten jeweils ein Festlegemittel zur Festlegung der Ankerelemente (26, 46) an dem Schienenkörper (12; 32; 62) aufweisen.

2. Ankerschiene nach Anspruch 1, **dadurch gekennzeichnet, dass** der Festlegeabschnitt zumindest eines Niets in Bezug auf den Aufnahmeraum (13; 63) den Rand der Lochung (15; 65) von aussen her umgreift.

3. Ankerschiene nach Anspruch 1 oder 2, **dadurch gekennzeichnet, dass** der Festlegeabschnitt zumindest eines Niets in Bezug auf den Aufnahmeraum (33) den Rand der Lochung (35) von innen her umgreift.

4. Ankerschiene nach einem der Ansprüche 1 bis 3, **dadurch gekennzeichnet, dass** zumindest eine Vertiefung (16; 66) mit einem Bodenabschnitt (17; 67) an dem Schienenkörper (12; 62) vorgesehen ist und zumindest eine der Nieten in dem Bodenabschnitt (17; 67) der Vertiefung (16; 66) angeordnet ist.

5. Ankerschiene nach Anspruch 4, **dadurch gekennzeichnet, dass** die zumindest eine Vertiefung (66) dem Aufnahmeraum (63) zugewandt ausgerichtet ist.

## Claims

1. Anchor rail with a rail body (12; 32; 62) which forms a seating space (13; 33; 63) to seat a link piece (7) for securing a fixing element (6) to the anchor rail (11; 31; 61) and is provided with holes (15; 35; 65), wherein connection pieces (21; 41; 71) for securing anchor elements (26, 46) to the rail body (12; 32; 62) are provided in the holes (16; 35; 65), **characterized in that**
the connection pieces (21; 41; 71) are in the form of rivets, i.e. riveted nuts, with a base body (52) and a collar portion (56) extending from the base body (52) as a fixing portion, wherein the base body (52) has a larger diameter than the collar portion (56), wherein a bearing face (55) of the base body (52) prevents the riveted nut (51) from dropping through the hole (15, 35) upon assembly, and wherein the collar portions (56) of the rivets inserted through their respective holes (15; 35; 65) are expanded, and in particular flattened down, to fasten the rivets to the rail body (12; 32; 62), and the rivets have securing means for securing the respective anchor elements (26, 46) to the rail body (12; 32; 62).

2. Anchor rail according to Claim 1, **characterized in that** the fixing portion of at least one rivet clasps the rim of the hole (15; 65) from outside with respect to the seating space (13; 63).

3. Anchor rail according to Claim 1 or Claim 2, **characterized in that** the fixing portion of at least one rivet clasps the rim of the hole (35) from inside with respect to the seating space (33).

4. Anchor rail according to any one of Claims 1 to 3, **characterized in that** at least one indentation (16; 66) with a bottom portion (17; 67) is provided on the rail body (12; 62), and at least one of the rivets is arranged in the bottom portion (17; 67) of the indentation (16; 66).

5. Anchor rail according to Claim 4, **characterized in that** the at least one indentation (66) is made towards the seating space (63).

## Revendications

1. Rail d' ancrage comprenant un corps (12 ; 32 ; 62) de rail, qui forme un espace de logement (13 ; 33 ; 63), destiné à l'admission d'une pièce de liaison (7) pour la mise en place d' un élément de fixation (6) sur le rail d'ancrage (11 ; 31 ; 61), et qui est muni de perforations (15 ; 35 ; 65), des pièces de liaison (21 ; 41 ; 71) pour la fixation d'éléments (26, 46) d'ancrage sur le corps (12 ; 32 ; 62) de rail étant prévues dans les perforations (15 ; 35 ; 65), **caractérisé en ce que**
les pièces de liaison (21 ; 41 ; 71) sont conçues sous forme de rivets, notamment d'écrous à riveter, comprenant un corps de base (52) et une partie en collerette (56) s'étendant à partir du corps de base (52), servant de partie de fixation, le corps de base (52) présentant un diamètre supérieur au niveau de la partie en collerette (56) et une face d'appui (55) du corps de base (52) empêchant une chute de l'écrou à riveter (51) à travers la perforation (15, 35) lors de leur montage, et chacune des parties en collerette (56) des rivets enfoncée dans la perforation (15 ; 35 ; 65) étant élargie, notamment munie d'un rebord, pour la fixation des rivets sur le corps de rail (12 ; 32 ; 62), et les rivets présentant chacun un moyen de fixation pour la mise en place des éléments d'ancrage (26, 46) sur le corps (12 ; 32 ; 62) de rail.

2. Rail d'ancrage selon la revendication 1, **caractérisé en ce que** la partie de fixation entoure en agrippant par l'extérieur, par rapport à l'espace de logement (13 ; 63), au moins un rivet au bord de la perforation (15 ; 65).

3. Rail d'ancrage selon les revendications 1 ou 2, **caractérisé en ce que** la partie de fixation entoure en agrippant par l'intérieur, par rapport à l'espace de logement (13 ; 63), au moins un rivet au bord de la perforation (35).

4. Rail d'ancrage selon l'une des revendications 1 à 3, **caractérisé en ce qu'**au moins une cavité (16 ; 66) comprenant une partie de socle (17 ; 67) est prévue sur le corps (12 ; 62) de rail et qu'au moins l'un des rivets est disposé dans la partie de socle (17 ; 67) de la cavité (16 ; 66).

5. Rail d'ancrage selon la revendication 4, **caractérisé en ce qu'**au moins une cavité (66) est installée orientée vers l'espace de logement (63).
